# EUROPÄISCHE PATENTSCHRIFT

(11) **EP 2 992 195 B1**
(45) Veröffentlichungstag und Bekanntmachung des Hinweises auf die Patenterteilung: **21.09.2016**
(21) Anmeldenummer: 15701470.5
(22) Anmeldetag: 20.01.2015
(51) Int. Cl.: F02B 19/06, F02B 19/02, F02B 19/10, F02D 13/02, F02M 21/02

(54) **HUBKOLBENBRENNKRAFTMASCHINE SOWIE VERFAHREN ZUM BETREIBEN EINER HUBKOLBENBRENNKRAFTMASCHINE**
RECIPROCATING PISTON INTERNAL COMBUSTION ENGINE, AND METHOD FOR OPERATING A RECIPROCATING PISTON INTERNAL COMBUSTION ENGINE
MOTEUR À COMBUSTION INTERNE À PISTON ALTERNATIF AINSI QUE PROCÉDÉ POUR FAIRE FONCTIONNER UN MOTEUR À COMBUSTION INTERNE À PISTON ALTERNATIF

(30) Priorität: 21.01.2014 DE 102014000750
(43) Veröffentlichungstag der Anmeldung: 09.03.2016
(73) Patentinhaber: KREUTER, Peter, 52072 Aachen (DE)
(72) Erfinder: KREUTER, Peter, 52072 Aachen (DE)
(74) Vertreter: Kramer Barske Schmidtchen Patentanwälte PartG mbB
(86) Internationale Anmeldenummer: PCT/EP2015/000095
(87) Internationale Veröffentlichungsnummer: WO 2015/110257

(56) Entgegenhaltungen:
- DE-A1- 4 334 533
- DE-C1- 355 898
- JP-A- H10 141 060

## Beschreibung

Die Erfindung betrifft eine Hubkolbenbrennkraftmaschine sowie ein Verfahren zum Betreiben einer Hubkolbenbrennkraftmaschine.

Zur Erfüllung der strengen Abgasvorschriften muss insbesondere bei Dieselmotoren ein immer größerer Aufwand sowohl bezüglich der Kraftstoffaufbereitung (sehr hohe Einspritzdrucke) als auch bezüglich der Abgasnachbehandlung (Stickoxidkatalysatoren, Harnstoffeinblasung, Partikelfilter) getrieben werden, wodurch sich die Kosten der Motoren erheblich erhöhen. Bei modernen Ottomotoren bilden sich bei Direkteinspritzung im Abgas feine Partikel, die mit Partikelfiltern beseitigt werden müssen.

In der JP H10-141 060 A ist eine Hubkolbenbrennkraftmaschine offenbart, deren Arbeitskammer über ein Überströmventil mit einer Nebenkammer verbunden ist. Bevor der Kolben am Ende eines Verdichtungstaktes seinen oberen Totpunkt (OT) erreicht, wird das Überströmventil geöffnet, so dass verdichtete Frischluft aus der Arbeitskammer in die Nebenkammer einströmt. In der Nebenkammer wird Kraftstoffgas mit der verdichteten Frischluft vermischt. Infolge der hohen Verdichtung erfolgt eine Selbstzündung, so dass eine Flamme aus der Nebenkammer in die Arbeitskammer austritt und während des Verbrennungs- bzw. Arbeitstaktes eine vollständige Verbrennung des Gemisches aus Kraftstoffgas und Frischluft erfolgt. Das Volumen der Nebenkammer kann an die Last der Brennkraftmaschine angepasst werden.

Weitere Hubkolbenbrennkraftmaschinen sowie Verfahren zum Betreiben einer Hubkolbenbrennkraftmaschine sind aus der DE 43 34 533 A1 und der DE 355898 C1 bekannt.

Der Erfindung liegt die Aufgabe zugrunde, eine Hubkolbenbrennkraftmaschine sowie ein Verfahren zum Betreiben einer Hubkolbenbrennkraftmaschine anzugeben, mit der bzw. dem der Aufwand zur Erfüllung von Abgasvorschriften vermindert ist und gleichzeitig ein geringer Kraftstoffverbrauch erzielt wird.

Der eine Maschine betreffende Teil der Erfindungsaufgabe wird mit den Merkmalen des Anspruchs 1 gelöst. Bei der erfindungsgemäßen Brennkraftmaschine wird in der Nebenkammer befindliches, infolge des Fehlens von Frischluft nicht zündender gasförmiger Kraftstoff durch den Hilfskolben in die Arbeitskammer zwangsausgepresst bzw. eingeblasen und verbrennt dort infolge seiner Mischung mit der Frischluft schadstoffarm und mit geringen Wandwärmeverlusten.

Die Unteransprüche 2 bis 8 sind auf vorteilhafte Ausführungsformen und Weiterbildungen der erfindungsgemäßen Brennkraftmaschine gerichtet.

Gemäß dem Anspruch 2 kann die Brennkraftmaschine mit flüssigem Kraftstoff betrieben werden, wobei kein hoher Einspritzdruck erforderlich ist.

Gemäß dem Anspruch 3 kann die Brennkraftmaschine mit gasförmigem Kraftstoff, beispielsweise unter Druck stehendem Wasserstoff oder CNG , betrieben werden.

Mit den Merkmalen des Anspruchs 4 wird eine Vielstofffähigkeit erreicht.

Gemäß den Merkmalen der Ansprüche 5 und 6 kann in die erfindungsgemäße Brennkraftmaschine als Viertaktmotor oder Zweitaktmotor ausgebildet sein.

Gemäß den Ansprüchen 7 und 8 kann in die erfindungsgemäße Brennkraftmaschine mit fremdzuzündendem oder selbstzündendem Kraftstoff betrieben werden.

Der Anspruch 9 kennzeichnet eine vorteilhafte Ausbildung einer im Kolbenboden vorhandenen Kolbenmulde.

Die Patentansprüche 10 bis 16 sind auf Verfahren zur diesbezüglichen Lösung der Erfindungsaufgabe gerichtet.

Der Anspruch 10 kennzeichnet ein Betriebsverfahren, bei dem die Brennkraftmaschine im Viertaktverfahren arbeitet und mit flüssigem Kraftstoff betrieben wird.

Der Anspruch 11 kennzeichnet eine vorteilhafte Weiterbildung des Verfahrens gemäß Anspruch 10.

Der Anspruch 12 kennzeichnet ein Betriebsverfahren, bei dem die Brennkraftmaschine im Viertaktverfahren arbeitet und mit gasförmigem Kraftstoff betrieben wird.

Der Anspruch 13 kennzeichnet ein Betriebsverfahren, bei dem die Brennkraftmaschine im Zweitaktverfahren arbeitet und mit flüssigem Kraftstoff betrieben wird.

Der Anspruch 14 kennzeichnet eine vorteilhafte Weiterbildung des Verfahrens gemäß Anspruch 13.

Der Anspruch 15 kennzeichnet ein Betriebsverfahren, bei dem die Brennkraftmaschine im Zweitaktverfahren arbeitet und mit gasförmigem Kraftstoff betrieben wird.

Der Anspruch 16 kennzeichnet ein vorteilhaftes Verfahren zum Befüllen der Nebenkammer mit gasförmigem Kraftstoff.

Die Erfindung wird im Folgenden anhand schematischer Zeichnungen beispielsweise und mit weiteren Einzelheiten erläutert.

Es stellen dar:
Figur 1 eine schematische Querschnittsansicht einer erfindungsgemäßen Brennkraftmaschine,
Figur 2 eine Unteransicht eines Zylinderkopfes der erfindungsgemäßen Brennkraftmaschine zur beispielsweisen Verdeutlichung der relativen Anordnung von Ventilen und
Figur 3 eine schematische Querschnittsansicht einer erfindungsgemäßen Brennkraftmaschine mit gegenüber der Ausführungsform gemäß Figur 1 veränderten Kolben.

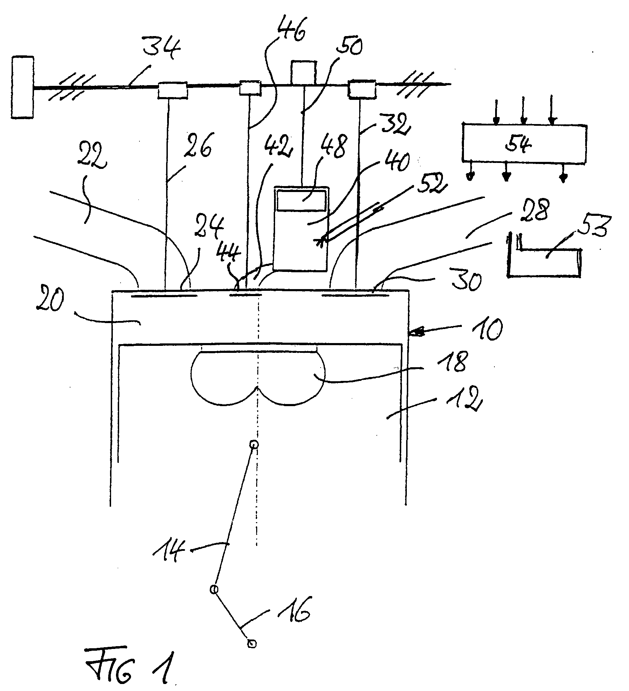

Gemäß Figur 1 weist eine erfindungsgemäße Hubkolbenbrennkraftmaschine wenigstens einen Zylinder 10 auf, in dem ein Kolben 12 auf- und abwärts beweglich ist, der über ein Pleuel 14 mit einer Kurbel einer Kurbelwelle 16 verbunden ist. Im dargestellten Beispiel weist der Kolben 12 eine Kolbenmulde 18 auf. Der Kolben 12 grenzt innerhalb des Zylinders 10 eine Arbeitskammer 20 ab. In die Arbeitskammer 20 mündet ein Einlasskanal 22. In der Mündung des Einlasskanals 22 in die Arbeitskammer 20 bzw. der Einlassöffnung 24 ist ein Einlassventil 26 angeordnet. Aus der Arbeitskammer 20 heraus führt ein Auslasskanal 28. Im Abgang des Auslasskanals 28 von der Arbeitskammer 20 bzw. in der Auslassöffnung 30 ist ein Auslassventil 32 angeordnet. Die Ventile 26 und 32 werden von einer Nockenwelle 34 betätigt, die in an sich bekannter Weise von der Kurbelwelle 16 her angetrieben werden.

Die bisher beschriebene Anordnung entspricht der eines konventionellen Motors und wird daher nicht weiter erläutert.

Gemäß der vorliegenden Erfindung ist beispielsweise im Zylinderkopf eine Nebenkammer 40 ausgebildet, die mit der Arbeitskammer 20 über einen Verbindungskanal 42 verbunden ist. In der Mündung des Verbindungskanals 42 in die Arbeitskammer 20 bzw. der Verbindungsöffnung 44 ist ein Überströmventil 46 angeordnet. In der Nebenkammer 40 ist ein das Volumen der Nebenkammer bestimmender Hilfskolben 48 gemäß der Figur auf- und abwärts beweglich, der einen Schaft 50 aufweist. Der Schaft 50 und damit der Hilfskolben 48 ist ähnlich wie das Überströmventil 46 mittels der Nockenwelle 34 betätigbar. Die Nockenwelle 34 ist normalerweise parallel zur Kurbelwelle 16 angeordnet. Lediglich wegen der vereinfachten Darstellung verläuft sie in der Figur rechtwinklig zur Kurbelwelle.

In die Nebenkammer 40 ist mittels eines beispielsweise mit integrierter Einspritzdüse ausgebildeten Kraftstoffzufuhrventils 52 Kraftstoff in zumessbarer Menge einspritzbar. Das Kraftstoffzufuhrventil 52 ist an eine in ihrem Aufbau an sich bekannte und insgesamt mit 53 bezeichnete Kraftstoffversorgungseinheit 53 mit einem Kraftstofftank für flüssigen Kraftstoff, beispielsweise Benzin oder Diesel, und einer Kraftstoffpumpe angeschlossen, die das Kraftstoffzufuhrventi 152 mit unter Druck stehendem Kraftstoff versorgt. Der Betrieb des Kraftstoffzufuhrventils 52 wird mittels eines elektrischen Steuergerätes 54 gesteuert, das dazu erforderliche Betriebsparameter der Brennkraftmaschine, wie Stellung eines Gaspedals, Drehstellung der Kurbelwelle, Drehzahl der Kurbelwelle erfasst und das Kraftstoffzufuhrventil 52 entsprechend in ihm abgelegten Steuerprogrammen steuert.

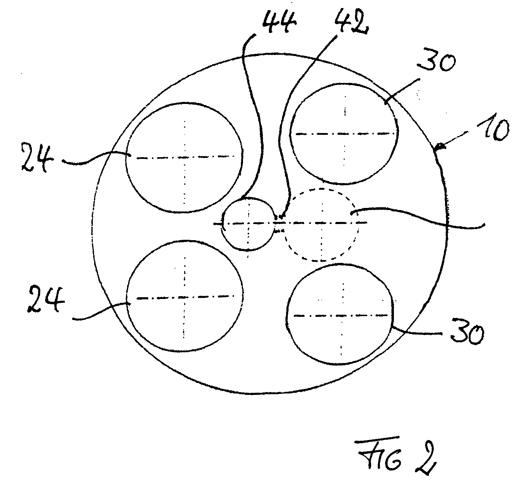

Figur 2 zeigt in einer schematischen Unteransicht ein Beispiel der relativen Anordnung von Einlassöffnung 24, Auslassöffnung 30 und Verbindungsöffnung 44. Im dargestellten Beispiel sind zwei Einlassöffnungen 24 vorhanden, in denen entsprechende Einlassventile 26 arbeiten. Weiter sind zwei Auslassöffnungen 30 vorhanden, in denen entsprechende Auslassventile 32 arbeiten. Die Verbindungsöffnung 44, in der das Überströmventil 46 arbeitet, ist zentral zwischen den Öffnungen 24 und 30 angeordnet und über den kurzen und mit kleinem Volumen ausgebildeten Verbindungskanal 42 mit der Nebenkammer 40 verbunden.

Die Funktion der beschriebenen Anordnung ist folgende:
Viertaktbetrieb mit flüssigem Kraftstoff:
   Wenn sich der Kolben 12 von seinem oberen Totpunkt (OT) zu seinem unteren Totpunkt (UT) bewegt, ist das Einlassventil 26 offen und wird durch den Einlasskanal 22 Frischluft angesaugt. Der Kolben 12 bewegt sich anschließend bei geschlossenem Einlassventil 26 zur Verdichtung der in ihm befindlichen Frischluft von seinem UT zu seinem OT. Kurz bevor der Kolben 12 seinen OT erreicht, wird das Überströmventil 46 geöffnet und in der Nebenkammer 40 befindliches Abgas, dem mittels des Kraftstoffzufuhrventils 52 Kraftstoff zugesetzt wurde, wird vom Hilfskolben 48, der sich in seine Minimalstellung bewegt, in der das Volumen der Nebenkammer 40 minimal ist, in die Arbeitskammer 20 ausgestoßen bzw. eingeblasen und vermischt sich dort mit der verdichteten Frischluft. Wenn der Kolben 12 seinen OT erreicht oder kurz danach wird das Überstromventil 46 geschlossen. Bei Betrieb mit Dieselkraftstoff entzündet sich die in der Arbeitskammer 20 befindliche verdichtete Frischladung von selbst, und der Kolben 12 bewegt sich anschließend unter Verbrennung der Frischladung von seinem OT zum UT. Dabei sind das Einlassventil 26 und das Auslassventil 32 geschlossen. Bei Betrieb mit Ottokraftstoff wird die verdichtete Frischladung mittels eines Zündmittels, z.B. einer Zündkerze, gezündet.

Bevor der Kolben 12 seinen UT erreicht, wird das Überströmventil 46 geöffnet und beginnt der Hilfskolben 48 seine Bewegung aus seiner Minimalstellung in seine Maximalstellung, in der das Volumen der Nebenkammer 40 maximal ist. Dabei strömt heißes verbranntes Abgas aus der Arbeitskammer 20 in die Nebenkammer 40. Wenn der Kolben 12 im Bereich seines UT ist bzw. vor oder bei Öffnung des Auslassventils 32 wird das Überstromventil 46 geschlossen, so dass sich in der Nebenkammer 40 heißes Abgas unter einem Druck befindet, der im Wesentlichen dem in der Arbeitskammer 20 bei Schließen des Überstromventils 46 herrschenden Druck entspricht. Das Kraftstoffzufuhrventil 52 wird geöffnet, so dass in das in der Nebenkammer 40 befindliche heiße Abgas Kraftstoff in vorbestimmter Menge, die der Last der Brennkraftmaschine entspricht, eingeleitet wird. Dabei besteht keine Gefahr einer unzulässigen Verbrennung, da das in der Nebenkammer 40 befindliche Abgas frei von Sauerstoff ist, oder Sauerstoff als Restsauerstoff in so geringer Menge enthält, dass eine allenfalls geringe Verbrennung bzw. Oxidationsreaktion (beispielsweise 1 bis 2% der in der Nebenkammer vorhandenen Kraftstoffmenge) erfolgt. Diese geringfügige, in der Nebenkammer 40 erfolgende Verbrennung unterstützt die Gemischaufbereitung thermisch und infolge entstehender Turbulenzen mechanisch. Der Kolben 12 bewegt sich bei nunmehr offenem Auslassventil 32 zu seinem OT, wobei das aus der in der Arbeitskammer 20 verbrannten Ladung entstandene Abgas durch den Auslasskanal 28 ausgeschoben wird. Es beginnt ein neuer Ansaugtakt.

Das beschriebene Verfahren hat folgende Vorteile:
Strömungsoberhalb des Kraftstoffzufuhrventils 52 ist lediglich ein Druck erforderlich, der etwas über dem in der Nebenkammer 40 bei Schließen des Überströmventils 46 herrschenden Abgasdruck liegt. Der flüssige Kraftstoff wird in einer ersten Phase bei geschlossenem Überströmventil 46 durch Öffnen des Kraftstoffzufuhrventils 52 in die Nebenkammer 40 eingespritzt und dort unter intensiver Vermischung mit dem in der Nebenkammer 40 befindlichen heißen Abgas verdampft und aufbereitet. Diese Aufbereitung wird gegebenenfalls durch eine geringfügige in der Nebenkammer 40 stattfindende Verbrennung bzw. Oxidationsreaktion unterstützt. Die Nebenkammer 40 hat somit die Funktion einer Gemischaufbereitungskammer. Anschließend wird der Kraftstoff in einer weiteren Phase zusätzlich aufbereitet, wenn er bei offenem Überströmventil 46 in die verdichtete Frischluft in der Arbeitskammer 20 einströmt. An das Einströmen schließt sich eine weitere Aufbereitungsphase an, während der sich das Kraftstoffabgasgemisch mit der in der Arbeitskammer 20 befindlichen Frischluft vermischt. Die Gemischbildung erfolgt somit in drei Phasen.

Auf diese Weise wird ohne Notwendigkeit hoher Einspritzdrucke eine ausgezeichnete Aufbereitung auch schwer verdampfbarer Kraftstoffe erzielt, die zu einer weitgehend homogenen und vollständigen Verbrennung des Kraftstoffes führt, was einerseits für einen guten Wirkungsgrad der Brennkraftmaschine sorgt und andererseits die Anforderungen an eine eventuell weiterhin erforderliche Abgasnachbehandlung herabsetzt.

Die erfindungsgemäße Brennkraftmaschine, die ein oder mehrere Zylinder haben kann, kann je nach verwendetem Kraftstoff mit Selbstzündung oder Fremdzündung betrieben werden. Es ist ein Betrieb mit flüssigen und/oder gasförmigen Kraftstoffen möglich.

Das Volumen des Verbindungskanals 42 ist relativ zum Volumen der Nebenkammer 40 vorteilhafterweise möglichst klein, damit das Gemisch aus Kraftstoff und Abgas durch die Bewegung des Hilfskolbens 48 in seiner Minimalstellung möglichst vollständig in die Arbeitskammer 20 ausgestoßen bzw. eingeblasen wird.

Die Betätigung der Ventile sowie des Hilfskolbens mittels der Nockenwelle 34 ist lediglich schematisch angedeutet. Zwischen den Nocken der Nockenwelle und den Ventilschäften bzw. dem Schaft 50 können Übersetzungsglieder wie Kipphebel, Schwenkhebel usw. angeordnet sein. Das Überströmventil 46 wird bevorzugt von einer nicht dargestellten Feder in Schließstellung gehalten, die es bei Überdruck in der Gemischbildungskammer 40 zuverlässig geschlossen hält. Für die Ventile und den Hilfskolben können eigene Nockenwellen vorgesehen sein, die von der Kurbelwelle her gegebenenfalls unter Zwischenanordnung von Phasenstellern angetrieben werden. Die Ventile und der Hilfskolben können auch von eigenen Antrieben, beispielsweise elektrisch, elektromagnetisch, hydraulisch oder pneumatisch angetrieben werden.

Vorteilhaft ist insbesondere das Überströmventil 46 als vom Steuergerät 54 frei steuerbares Ventil auszubilden, bei dem ein oder mehrere Löcher durch Bewegen eines vom Steuergerät 54 gesteuerten magnet-elektrisch, piezo-elektrisch oder hydraulisch betätigten Ventilgliedes freigegeben werden. Falls es zweckmäßig ist, können zum Einleiten von Abgas in die Nebenkammer und zum Einblasen des Kraftstoffgases aus der Nebenkammer getrennte Überströmventile verwendet werden. Die Menge an Restsauerstoff, die mit dem Abgas in die Nebenkammer 40 gelangt, kann durch Steuerung des Überströmventils 46 beeinflusst werden.

Das Überströmventil 46 bzw. die Verbindungsöffnung 44 ist vorteilhafterweise möglichst zentral über der Arbeitskammer 20 angeordnet.

Das Maximalvolumen der Nebenkammer 40 (Hilfskolben 48 in Maximalstellung) beträgt beispielsweise etwa 1% des maximalen Volumens der Arbeitskammer 20 (Kolben 12 in UT).

Das Überströmventil 46 ist für das Beladen der Gemischbildungskammer 40 mit Abgas beispielsweise während einer Kurbelwellendrehung um etwa 45° geöffnet und schließt etwa gleichzeitig mit der Öffnung des Auslassventils 32. Das Öffnen des Überströmventils 46, die Bewegung des Hilfskolbens 48 zur Vergrößerung des Volumens der Nebenkammer 40, die Bewegung des Kolbens 12 und das Öffnen des Auslassventils 32 sind derart aufeinander abgestimmt, dass für das Beladen der Nebenkammer 40 der (dynamische) Druck in der Arbeitskammer 20 größer ist als der (dynamische) Druck in der Nebenkammer 40.

Der Kraftstoff wird vorteilhafterweise möglichst früh in die Nebenkammer 40 eingeleitet, damit für die erste Phase der Gemischbildung viel Zeit zur Verfügung steht.

Für das Einblasen des Abgas-Kraftstoffgemisches aus der Nebenkammer 40 in die Arbeitskammer 20 ist das Überströmventil 46 beispielsweise während einer Drehung der Kurbelwelle um etwa 40° geöffnet und wird im oder kurz nach dem OT des Kolbens 12 geschlossen.

Vorstehend wurde der Betrieb der Brennkraftmaschine mit flüssigem Kraftstoff, wie Benzin, Diesel, Flüssiggas, Methanol usw., erläutert.

Es ist auch ein Betrieb mit gasförmigem Kraftstoff, wie Erdgas, Wasserstoff, Methan usw., möglich. Die Kraftstoffversorgungseinheit 53 enthält dann einen Drucktank zur Aufnahme eines Vorrats des unter Druck stehendem gasförmigen Kraftstoffes bzw. Brenngases. Das Kraftstoffzumessventil 52 ist dann ein für das gesteuerte Einleiten von unter Druck stehendem gasförmigen Kraftstoff in die Nebenkammer 40 geeignetes Ventil mit zugehöriger Austrittsöffnung bzw. Austrittsöffnungen. Da eine Aufbereitung bzw. Verdampfung des flüssigen Kraftstoffes bzw. Brenngases in der Nebenkammer 40 mit Hilfe des Abgases nicht erforderlich ist, wird die Brennkraftmaschine bzw. deren Betrieb vorteilhafterweise folgendermaßen modifiziert:
Viertaktbetrieb mit gasförmigem Kraftstoff:
   Das Überströmventil 46 wird , wie vorstehend beschrieben, unmittelbar nach dem Einblasen von in der Nebenkammer 40 befindlichem gasförmigen Kraftstoff in die Arbeitskammer 20 bei im Bereich seines OT befindlichem Kolben 12 geschlossen und bleibt dann im Gegensatz zur vorbeschriebenen Ausführungsform geschlossen, bis es erneut zum Einblasen von gasförmigem Kraftstoff in die Arbeitskammer 20 geöffnet wird. Unmittelbar nach dem Schließen des Überströmventils 46 wird der Hilfskolben 48 zur Vergrößerung des Volumens der Nebenkammer 40 in Richtung seiner Maximalstellung bewegt und beginnt, vorteilhafterweise noch bei in Minimalstellung befindlichem Hilfskolben 48, die Einleitung einer von der Last der Brennkraftmaschine abhängigen Menge des gasförmigen Kraftstoffes durch das Kraftstoffzufuhrventil 52. Dabei ist vorteilhaft, die Steuerung des Kraftstoffzufuhrventils 52 auf die Bewegung des Hilfskolbens 48 derart abzustimmen, dass der Druck in der Nebenkammer 20 während der Vergrößerung von deren Volumen dem strömungsoberhalb des Kraftstoffzufuhrventils 52 herrschenden, im Gastank herrschenden Zufuhr- bzw. Versorgungsdruck entspricht. Die Kraftstoffversorgungseinheit 53 kann beispielsweise einen Gastank enthalten, in dem Wasserstoff mit einem Druck von 700 bar gespeichert ist. Wenn die für die Last der Brennkraftmaschine erforderliche Menge an gasförmigem Kraftstoff in die Nebenkammer 40 eingeleitet ist und das Kraftstoffzufuhrventil 52 geschlossen wird, vergrößert sich das Volumen der Nebenkammer 40 ggfs. weiter, bis sich der Hilfskolben in seine Maximalstellung bewegt hat. Der Druck in der Nebenkammer 40 nimmt dann ab. Beim Bewegen des Hilfskolbens 48 zurück in seine Minimalstellung nimmt der Druck in der Nebenkammer 40 dann zu, bis das Überströmventil 46 öffnet und der gasförmige Kraftstoff in die Arbeitskammer 20 eingeblasen wird.

Das Kraftstoffzufuhrventil 52 ist bei Verwendung eines gasförmigen Kraftstoffes vorteilhaft derart angeordnet, dass das Einleiten des Kraftstoffgases in die Nebenkammer 40 bereits bei in seiner Minimalstellung befindlichem Hilfskolben 48 beginnen und dann ggfs. bei der Bewegung des Hilfskolbens 48 aus seiner Minimalstellung andauern kann.

Im Vergleich zu einer konventionellen Zumischung des gasförmigen Kraftstoffes zu der Frischluft strömungsoberhalb des Einlassventils 26 oder einer konventionellen Direkteinblasung des gasförmigen Kraftstoffes in die Arbeitskammer 20 werden mit der Zwischenspeicherung des gasförmigen Kraftstoffes in der Nebenkammer 40 und dem Einblasen des gasförmigen Kraftstoffes in die Arbeitskammer 20 folgende Vorteile erzielt:
Der unter seinem Versorgungsdruck stehende gasförmige Kraftstoff wird zunächst unter weitgehender Beibehaltung seines Druckes in die Nebenkammer 40 eingeleitet, wobei vorteilhaft ein Gaszufuhrventil mit großem Öffnungsquerschnitt verwendet wird. Anschließend wird das in der Nebenkammer 40 befindliche Gas durch die Bewegung des Hilfskolbens 48 zunächst expandiert. Bei der nachfolgenden Bewegung des Hilfskolbens 48 aus seiner Maximalstellung zur Minimalstellung nimmt der Druck in der Nebenkammer 40 zu bis das Überströmventil 46, vorteilhafterweise vom Steuergerät 54 gesteuert, bei Erreichen einer positiven Druckdifferenz von der Nebenkammer 40 zur Arbeitskammer 20 öffnet und das in der Nebenkammer 40 befindliche Gas in die Arbeitskammer 20 eingeblasen wird. Die Öffnung des Überströmventils 46 erfolgt im Allgemeinen bei einem Druck in der Nebenkammer 40, der unter dem Versorgungsdruck strömungsoberhalb des Kraftstoffzufuhrventils 52 liegt. Auf diese Weise kann zumindest ein Teil der Energie, die zum Komprimieren des gasförmigen Kraftstoffes auf seinen Speicherdruck im Vorratstank erforderlich war, genutzt werden. Der Wirkungsgrad der Brennkraftmaschine wird dadurch verbessert.

Vorstehend wurde die Erfindung an einer Brennkraftmaschine erläutert, die im Viertaktverfahren mit flüssigen oder gasförmigen Kraftstoff betrieben wird. Die erfindungsgemäße Brennkraftmaschine, insbesondere die Nebenkammer 40 mit dem Überströmventil 46 und dem Hilfskolben 48, kann auch für einen Betrieb im Zweitaktverfahren verwendet werden:
Zweitaktbetrieb mit flüssigem Kraftstoff:
   Die Steuerzeiten des oder der Einlassventile und Auslassventils sind dabei in an sich bekannter Weise wie für Zweitaktmotoren üblich gewählt, so dass ein guter Kompromiss aus Frischgasfüllung, Verdichtung und Spülung erzielt wird. Beispielsweise öffnet das Einlassventil zwischen 180 Grad und 300 Grad Kurbelwinkel und das Auslassventil zwischen 160 Grad und 280 Grad Kurbelwinkel. Der Brennkraftmaschine wird verdichtete Frischluft zugeführt. Die Verdichtung kann beispielsweise in einem Abgasturbolader erfolgen, der, solange nicht genügend energiereiches Abgas zur Verfügung steht, fremdangetrieben wird , oder zusätzlich zu dem ein fremdangetriebener Lader verwendet wird. Das oder die Einlassventile 24 können wie in Fig. 1 und 2 dargestellt ausgebildet sein oder in an sich bekannter Weise durch Schlitze in der Zylinderwand gebildet sein, die vom Kolben 12 freigegeben werden, wenn er sich seinem UT nähert. Das oder die Auslassventile 32 ist oder sind weiterhin vorteilhaft Tellerventile, wobei die Verbindungsöffnung 44 mit dem Überströmventil 46 möglichst nah an der bzw. den Auslassöffnung(en) 30 angeordnet ist, damit Abgas in die Nebenkammer 40 gelangt, das zumindest weitgehend frei von Frischluft bzw. Frischladung ist. Im Übrigen entsprechen Funktion und Wirkungsweise der Nebenkammer 40 bei Zweitaktbetrieb denen bei Viertaktbetrieb.

Bei Betrieb mit flüssigem Kraftstoff erfolgen folgende Arbeitsschritte:
Während der Bewegung des Kolbens 12 in einer letzten Phase vor UT bis zu einer ersten Phase nach UT wird unter Druck stehende Frischluft bei offenem Einlassventil 26 in die Arbeitskammer 20 eingeleitet und zeitlich überlappend bei offenem Auslassventil 32 Abgas aus der Arbeitskammer 20 ausgeleitet.

Das Überströmventil 46 wird zum Beladen der Nebenkammer 40 mit Abgas beispielsweise ca. 90 Grad nach OT geöffnet und spätestens vor Öffnung des oder der Auslassventile 32 geschlossen. Dem in der Nebenkammer befindlichen Abgas wird nach Schließen des Überströmventils 46 flüssiger Kraftstoff in zugemessener Menge zugeführt wird, der in der Nebenkammer 40 verdampft.
Während der Bewegung des Kolbens 12 zum OT werden das Einlassventil 26 und das Auslassventil 32 geschlossen, wobei die die eingeleitete verdichtete Frischluft weiter verdichtet wird.
Kurz vor oder bei im Bereich seines OT befindlichen Kolben 12 (beispielsweise 20 Grad bis 0 Grad vor OT) wird die Überströmventil 46 geöffnet, so dass das in der Nebenkammer 40 befindliche gasförmige Kraftstoff /Abgasgemisch durch Bewegen des Hilfskolbens 48 aus seiner Maximalstellung in seine Minimalstellung in die Arbeitskammer 20 zwangsweise eingeblasen wird und dort unter Selbstzündung oder Fremdzündung verbrennt.

Gegenüber dem Viertaktbetrieb ist bei Zweitaktbetrieb zwar die zur Verdampfung des flüssigen Kraftstoffes in der Nebenkammer 40 verfügbare Zeitdauer erheblich verkürzt; dennoch bleiben die oben geschilderten Vorteile weitgehend erhalten. Ein weiterer, im Zweitaktbetrieb mit der Nebenkammer erzielter Vorteil liegt darin, dass ein Entweichen von verdampftem Kraftstoff in das Abgas zumindest weitgehend verhindert wird.

Zweitaktbetrieb mit gasförmigem Kraftstoff:
Bei Betrieb mit gasförmigem Kraftstoff erfolgen die vorstehend erläuterten Arbeitsschritte in ähnlicher Weise mit dem Unterschied, dass die Öffnung des Überströmventils 46 zum Zweck des Einströmens von Abgas in die Nebenkammer 40 unterbleibt und der gasförmige Kraftstoff unmittelbar nach Schließen des Überströmventils 46 bei noch in seiner Minimalstellung befindlichem Hilfskolben 48 oder unmittelbar nach Bewegen des Hilfskolbens 48 aus seiner Minimalstellung in die Nebenkammer 40 eingeblasen wird, ähnlich wie vorstehend beim Viertaktverfahren mit gasförmigem Kraftstoff erläutert.

Bei allen vorbeschriebenen Durchführungsformen der Erfindung kann erreicht werden, dass der verdampfte bzw. gasförmige Kraftstoff die Wände der Arbeitskammer 20 nicht erreicht, wodurch die Verbrennung verbessert wird und Wandwärmeverluste vermindert werden.

Die erfindungsgemäße Brennkraftmaschine kann sowohl mit flüssigem als auch mit gasförmigem Kraftstoff betrieben werden, wenn zwei Kraftstoffzumessventile und zugehörige Kraftstoffversorgungseinheiten vorgesehen sind, die an die jeweiligen Kraftstoffarten angepasst sind. Bei Betrieb mit gasförmigem Kraftstoff ist bei einem Wechsel beispielsweise von Wasserstoff auf CNG lediglich eine Softwareänderung im Steuergerät 54 zur Anpassung an unterschiedliche Speicherdrucke, Brennwerte usw. erforderlich.

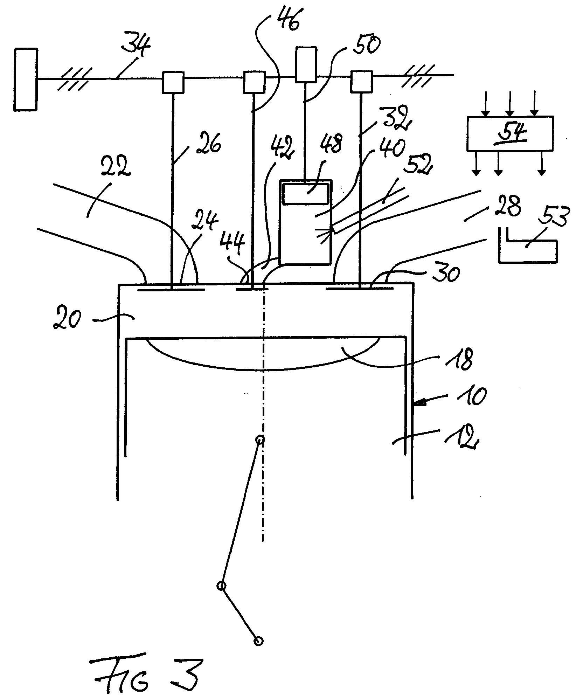

Bezüglich der Kolbenmulde 18 bestehen bei der erfindungsgemäßen Brennkraftmaschine größere Gestaltungsfreiheiten als bei herkömmlichen Brennkraftmaschinen, bei denen die Mulde maßgeblichen Anteil an der Gemischaufbereitung hat. Vorteilhaft ist eine Ausbildung der Kolbenmulde 18 als relativ flache konkave Einbauchung, die sich zumindest über einen großen Teil des Kolbenbodens erstreckt, wie in Fig. 3 dargestellt. Die Tiefe der Einbauchung beträgt beispielsweise etwa 10 bis 20% des Kolbendurchmessers. Die Einbauchung erstreckt sich beispielsweise über mehr 70% der Querschnittsfläche des Kolbens 12. Mit dieser Gestaltung der Kolbenmulde 18 wird vermieden, dass eine sich am Ende eines Kompressionshubs zwischen dem Kolben und dem Zylinderkopf ausbildende Quetschströmung und damit ein Wärmetausch zwischen dem Kolben 12 und dem Zylinder unvorteilhaft groß wird. Weiter wird bei beginnender Expansion die Rückströmgeschwindigkeit der brennenden Zylinderladung vermindert, wodurch eine Verbesserung des Wirkungsgrades erzielt wird.

Es wird explizit betont, dass alle in der Beschreibung offenbarten Merkmale als getrennt und unabhängig voneinander zum Zweck der ursprünglichen Offenbarung ebenso wie zum Zweck des Einschränkens der beanspruchten Erfindung angesehen werden sollen, wie es in den Ansprüchen definiert ist Es wird explizit festgehalten, dass alle Größenangaben nur beispielhaft und nicht einschränkend sind.

### Bezugszeichenliste

- 10: Zylinder
- 12: Kolben
- 14: Pleuel
- 16: Kurbelwelle
- 18: Kolbenmulde
- 20: Arbeitskammer
- 22: Einlasskanal
- 24: Einlassöffnung
- 26: Einlassventil
- 28: Auslasskanal
- 30: Auslassöffnung
- 32: Auslassventil
- 34: Nockenwelle
- 40: Nebenkammer
- 42: Verbindungskanal
- 44: Verbindungsöffnung
- 46: Überströmventil
- 48: Hilfskolben
- 50: Schaft
- 52: Kraftstoffzufuhrventil
- 53: Kraftstoffversorgungseinheit
- 54: Steuergerät

## Patentansprüche

1. Hubkolbenbrennkraftmaschine mit
wenigstens einem Zylinder (10), in dem ein mit einer Kurbelwelle (16) verbundener Kolben (12) unter Begrenzung einer Arbeitskammer (20) hin und her beweglich ist,
einem Einlassventil (26) zur Steuerung der Zufuhr von Frischluft in die Arbeitskammer (20), einem Auslassventil (30) zur Steuerung des Austritts von Abgas aus der Arbeitskammer (20), wobei während eines Arbeitstaktes in der Arbeitskammer (20) befindliches Kraftstoff-/Luftgemisch verbrennt und den Kolben (12) in Richtung einer Bewegung von einem OT zu einem UT zur Arbeitsabgabe an die Kurbelwelle (16) antreibt,
einer Nebenkammer (40), die über ein Überströmventil (46) mit der Arbeitskammer (20) verbunden ist,
einem das Volumen der Nebenkammer (40) bestimmenden Hilfskolben (48),
einem in die Nebenkammer (40) führendem Kraftstoffzufuhrventil (52) und
einer Einrichtung (34, 54) zur Betätigung des Überströmventils (46) und des Kraftstoffzufuhrventils (52) sowie zur Bewegung des Hilfskolbens (48) derart, dass keine Frischluft aus der Arbeitskammer (20) in die Nebenkammer (40) gelangt und durch Bewegung des Hilfskolbens (48) von dem Kraftstoffzufuhrventil (52) in die Nebenkammer (40) eingeleiteter flüssiger Kraftstoff nach Verdampfung in der Nebenkammer (20) oder von dem Kraftstoffzufuhrventil (52) in die Nebenkammer (40) eingeleiteter gasförmiger Kraftstoff aus der Nebenkammer (40) in die Arbeitskammer (20) zur Bildung des brennbaren Kraftstoff-/Luftgemisches eingeblasen wird.

2. Hubkolbenbrennkraftmaschine nach Anspruch 1, wobei das Kraftstoffzufuhrventil (52) zum Einleiten von flüssigem Kraftstoff geeignet ist und an eine Kraftstoffversorgungseinheit (53) angeschlossen ist, die unter Druck stehenden flüssigen Kraftstoff führt.

3. Hubkolbenbrennkraftmaschine nach Anspruch 1, wobei das Kraftstoffzufuhrventil (52) zum Einleiten von gasförmigen Kraftstoff geeignet ist und an eine Kraftstoffversorgungseinheit (53) angeschlossen ist, die unter Druck stehenden gasförmigen Kraftstoff führt.

4. Hubkolbenbrennkraftmaschine nach einem der Ansprüche 1 bis 3, enthaltend ein Kraftstoffzufuhrventil für flüssigen Kraftstoff und ein Kraftstoffzufuhrventil für gasförmigen Kraftstoff.

5. Hubkolbenbrennkraftmaschine nach einem der Ansprüche 1 bis 4, arbeitend nach einem Viertaktverfahren.

6. Hubkolbenbrennkraftmaschine nach einem der Ansprüche 1 bis 4, arbeitend nach einem Zweitaktverfahren.

7. Hubkolbenbrennkraftmaschine nach einem der Ansprüche 1 bis 6, wobei das in der Arbeitskammer (20) zu Beginn eines Arbeitstaktes befindliche Luft-/Kraftstoffgemisch infolge seiner Stoffeigenschaften und seiner Verdichtung selbst zündet.

8. Hubkolbenbrennkraftmaschine nach einem der Ansprüche 1 bis 6, enthaltend eine Zündeinrichtung zum Zünden des zu Beginn eines Arbeitstaktes in der Arbeitskammer befindlichen Luft-/Kraftstoffgemisches.

9. Hubkolbenbrennkraftmaschine nach einem der Ansprüche 1 bis 8, wobei der Kolben (12) eine Kolbenmulde (18) aufweist, die als relativ flache konkave Einbauchung ausgebildet ist, die sich zumindest über einen großen Teil des Kolbenbodens erstreckt.

10. Verfahren zum Betreiben einer Hubkolbenbrennkraftmaschine mit wenigstens einem Zylinder (10), in dem ein eine Arbeitskammer (20) begrenzender, mit einer Kurbelwelle (16) verbundener Kolben (12) hin und her beweglich ist, wobei in einem Ansaugtakt Frischluft in die Arbeitskammer (20) einströmt, in einem Verdichtungstakt die eingeströmte Frischluft verdichtet wird, in einem Arbeitstakt die verdichtete Frischluft vermischt mit Kraftstoff verbrannt wird und in einem Auslasstakt Abgas aus der Arbeitskammer (20) austritt, bei welchem Verfahren ein Teil des durch die Verbrennung entstandenen Abgases aus der Arbeitskammer (20) in eine Nebenkammer (40), die über ein Überströmventil (46) mit der Arbeitskammer (20) verbunden ist und deren Volumen von einem Hilfskolben (48) bestimmt wird, unter Vergrößerung des Volumens der Nebenkammer einströmt, in das in der Nebenkammer (40) befindliche heiße Abgas Kraftstoff eingeleitet wird, der infolge der thermischen Energie des Abgases verdampft, und das in der Nebenkammer (40) befindliche, mit Kraftstoff durchmischte Abgas als gasförmiges Kraftstoff-/Abgasgemisch während eines Endbereiches des Verdichtungstaktes und/oder Anfangsbereiches des Arbeitstaktes unter Volumenverkleinerung der Nebenkammer (40) in die Arbeitskammer (20) eingeblasen wird.

11. Verfahren nach Anspruch 10, wobei das in die Nebenkammer (40) einströmende Abgas Restsauerstoff enthält, so dass die Verdampfung des in die Nebenkammer (40) eingeleiteten Kraftstoffes durch die infolge der Verbrennung eines Teils des in der Nebenkammer (40) befindlichen Kraftstoffes frei werdenden Verbrennungsenergie unterstützt wird.

12. Verfahren zum Betreiben einer Hubkolbenbrennkraftmaschine mit wenigstens einem Zylinder (10), in dem ein eine Arbeitskammer (20) begrenzender, mit einer Kurbelwelle (16) verbundener Kolben (12) hin und her beweglich ist, wobei in einem Ansaugtakt Frischluft in die Arbeitskammer (20) einströmt, in einem Verdichtungstakt die eingeströmte Frischluft verdichtet wird, in einem Arbeitstakt die verdichtete Frischluft vermischt mit Kraftstoff verbrannt wird und in einem Auslasstakt Abgas aus der Arbeitskammer (20) austritt, bei welchem Verfahren in eine Nebenkammer, die über ein Überströmventil (46) mit der Arbeitskammer (20) verbunden ist und deren Volumen von einem Hilfskolben (48) bestimmt wird, eingeleiteter gasförmiger Kraftstoff während eines Endbereiches des Verdichtungstaktes und/oder Anfangsbereiches des Arbeitstaktes unter Volumenverkleinerung der Nebenkammer (40) in die Arbeitskammer (20) eingeblasen wird.

13. Verfahren zum Betreiben einer Hubkolbenbrennkraftmaschine mit wenigstens einem Zylinder (10), in dem ein eine Arbeitskammer (20) begrenzender, mit einer Kurbelwelle (16) verbundener Kolben (12) zwischen einem UT und einem OT hin und her beweglich ist, enthaltend folgende Arbeitsschritte:
während der Bewegung des Kolbens in einer letzten Phase vor UT bis zu einer ersten Phase nach UT Einleiten von unter Druck stehender Frischluft in die Arbeitskammer (20) und
Ausleiten von Abgas aus der Arbeitskammer (20),
während der Bewegung des Kolbens (12) zum OT Verdichten der eingeleiteten Frischluft,
Einleiten von gasförmigem Kraftstoff in die verdichtete Frischluft bei im Bereich seines OT befindlichen Kolben (12),
während einer ersten Phase der Bewegung des Kolbens (12) vom OT zum UT Verbrennen des Kraftstoff-/Luftgemisches,
wobei ein Teil des entstehenden Abgases in eine Nebenkammer (40), die über ein Überströmventil (46) mit der Arbeitskammer (20) verbunden ist und deren Volumen von einem Hilfskolben (48) bestimmt wird, eingeleitet wird, dem in der Nebenkammer (40) befindlichen heißen Abgas flüssiger Kraftstoff zugeführt wird, der in der Nebenkammer (40) infolge der thermischen Energie des Abgases verdampft, und das in der Nebenkammer (40) befindliche gasförmige Kraftstoff-/Abgasgemisch durch Verkleinerung des Volumens der Nebenkammer (40) bei im Bereich seines OT befindlichen Kolben (12) in die verdichtete Frischluft eingeblasen wird.

14. Verfahren nach Anspruch 13, wobei das in die Nebenkammer (40) eigeleitete Abgas Restsauerstoff enthält, so dass die Verdampfung des in die Nebenkammer (40) eingeleiteten Kraftstoffes durch die infolge der Verbrennung eines Teils des in der Nebenkammer (40) befindlichen Kraftstoffes frei werdenden Verbrennungsenergie unterstützt wird.

15. Verfahren zum Betreiben einer Hubkolbenbrennkraftmaschine mit wenigstens einem Zylinder (10), in dem ein eine Arbeitskammer (20) begrenzender, mit einer Kurbelwelle (16) verbundener Kolben (12) zwischen einem UT und einem OT hin und her beweglich ist, enthaltend folgende Arbeitsschritte:
während der Bewegung des Kolbens in einer letzten Phase vor UT bis zu einer ersten Phase nach UT Einleiten von unter Druck stehender Frischluft in die Arbeitskammer und Ausleiten von Abgas aus der Arbeitskammer,
während der Bewegung des Kolbens zum OT Verdichten der eingeleiteten Frischluft,
Einleiten von gasförmigem Kraftstoff in die verdichtete Frischluft bei im Bereich seines OT befindlichen Kolben,
während einer ersten Phase der Bewegung des Kolbens vom OT zum UT Verbrennen des Kraftstoff-/Luftgemisches,
wobei unter Druck stehender gasförmiger Kraftstoff in eine Nebenkammer, die über ein Überströmventil (46) mit der Arbeitskammer (20) verbunden ist und deren Volumen von einem Hilfskolben (48) bestimmt wird, eingeleitet wird und durch Verkleinerung des Volumens der Nebenkammer bei im Bereich seines OT befindlichen Kolben in die verdichtete Frischluft eingeblasen wird.

16. Verfahren nach einem der Ansprüche 10 oder 12, wobei das Volumen der Nebenkammer (40) nach dem Einblasen des gasförmigen Kraftstoffes aus der Nebenkammer (40) in die Arbeitskammer (20) von einem minimalen Wert zu einem maximalen Wert vergrößert wird und unter einem Versorgungsdruck stehender gasförmiger Kraftstoff während einer ersten Phase der Volumenvergrößerung der Nebenkammer (40) in diese eingeleitet wird, wobei der in der Nebenkammer (40) vorhandene Druck etwa dem Versorgungsdruck entspricht, das Volumen der Nebenkammer (40) nach Beendigung des Einleitens des gasförmigen Kraftstoffes unter Expansion des in ihr befindlichen Gases auf den maximalen Wert vergrößert wird und anschließend zum Einblasen des gasförmigen Kraftstoffes auf den minimalen Wert verkleinert wird.

## Claims

1. Reciprocating piston internal combustion engine including
at least one cylinder (10), in which a piston (12) connected with a crankshaft (16) is reciprocally movable while defining a power chamber (20),
an intake valve (26) for controlling the supply of fresh air into the power chamber (20),
an exhaust valve (30) for controlling the discharge of exhaust gas from the power chamber (20), wherein a fuel/air mixture located in the power chamber (20) combusts during a power stroke and drives the piston (12) in a direction of movement from a TDC to a BDC for power delivery to the crankshaft (16),
an ancillary chamber (40), which is connected with the power chamber (20) via a flow-through valve (46),
an auxiliary piston (48) that determines the volume of the ancillary chamber (40),
a fuel supply valve (52) leading into the ancillary chamber (40),
a device (34, 54) for actuating the flow-through valve (46) and the fuel supply valve (52) as well as for moving the auxiliary piston (48) such that no fresh air from the power chamber (20) goes into the ancillary chamber (40) and such that, by moving the auxiliary piston (48), liquid fuel, which is introduced by the fuel supply valve (52) into the ancillary chamber (40), after vaporization in the ancillary chamber (20), or gaseous fuel, which is introduced by the fuel supply valve (52) into the ancillary chamber (40), is injected from the ancillary chamber (40) into the power chamber (20) for forming the combustible fuel/air mixture.

2. Reciprocating piston internal combustion engine according to claim 1, wherein the fuel supply valve (52) is suitable for introducing liquid fuel and is connected to a fuel supply unit (53) that supplies pressurized liquid fuel.

3. Reciprocating piston internal combustion engine according to claim 1, wherein the fuel supply valve (52) is suitable for introducing gaseous fuel and is connected to a fuel supply unit (53) that supplies pressurized gaseous fuel.

4. Reciprocating piston internal combustion engine according to one of claims 1 to 3, including a fuel supply valve for liquid fuel and a fuel supply valve for gaseous fuel.

5. Reciprocating piston internal combustion engine according to one of claims 1 to 4, operating according to a four-stroke process.

6. Reciprocating piston internal combustion engine according to one of claims 1 to 4, operating according to a two-stroke process.

7. Reciprocating piston internal combustion engine according to one of claims 1 to 6, wherein the fuel/air mixture located in the power chamber (20) at the beginning of a power stroke self ignites owing to its material properties and its compression.

8. Reciprocating piston internal combustion engine according to one of claims 1 to 6, including an ignition device for igniting the fuel/air mixture located in the power chamber (20) at the beginning of a power stroke.

9. Reciprocating piston internal combustion engine according to one of claims 1 to 8, wherein the piston (12) has a piston head cavity (18) that is formed as a relatively flat, concave depression that extends at least over a large portion of the piston head.

10. Method for operating a reciprocating piston internal combustion engine including at least one cylinder (10), in which a piston (12) connected with a crankshaft (16) and defining a power chamber (20) is reciprocally movable, wherein fresh air flows into the power chamber (20) in an intake stroke, the flowed-in fresh air is compressed in a compression stroke, the compressed fresh air mixed with fuel is combusted in a power stroke, and exhaust gas discharges from the power chamber (20) in an exhaust stroke, in which method a portion of the exhaust gas generated by the combustion flows from the power chamber (20) into an ancillary chamber (40), which is connected with the power chamber (20) via a flow-through valve (46) and whose volume is determined by an auxiliary piston (48), while the volume of the ancillary chamber is increasing, in which fuel is introduced into hot exhaust gas located in the ancillary chamber (40), which fuel is vaporized due to the thermal energy of the exhaust gas, and the exhaust gas, which is located in the ancillary chamber (40) and is thoroughly mixed with fuel, is injected into the power chamber (20) as a gaseous fuel/exhaust gas mixture during an end portion of the compression stroke and/or during an initial portion of the power stroke while the volume of the ancillary chamber (40) is decreasing.

11. Method according to claim 10, wherein the exhaust gas flowing into the ancillary chamber (40) contains residual oxygen so that the vaporization of the fuel introduced into the ancillary chamber (40) is facilitated by the combustion energy released owing to the combustion of a portion of the fuel located in the ancillary chamber (40).

12. Method for operating a reciprocating piston internal combustion engine including at least one cylinder (10), in which a piston (12) connected with a crankshaft (16) and defining a power chamber (20) is reciprocally movable, wherein fresh air flows into the power chamber (20) in an intake stroke, the flowed-in fresh air is compressed in a compression stroke, the compressed fresh air mixed with fuel is combusted in a power stroke, and exhaust gas discharges from the power chamber (20) in an exhaust stroke, in which method gaseous fuel introduced into an ancillary chamber (40), which is connected with the power chamber (20) via a flow-through valve (46) and whose volume is determined by an auxiliary piston (48), is injected into the power chamber (20) during an end portion of the compression stroke and/or during an initial portion of the power stroke while the volume of the ancillary chamber (40) is decreasing.

13. Method for operating a reciprocating piston internal combustion engine including at least one cylinder (10), in which a piston (12) connected with a crankshaft (16) and defining a power chamber (20) is reciprocally movable between a BDC and a TDC, including the following power steps:
during the movement of the piston in a last phase before the BDC up to a first phase after BDC, introducing pressurized fresh air into the power chamber (20) and discharging exhaust gas from the power chamber (20),
during the movement of the piston (12) to the TDC, compressing the introduced fresh air, introducing gaseous fuel into the compressed fresh air when the piston (12) is located in the region of its TDC,
during a first phase of the movement of the piston (12) from the TDC to the BDC, combusting the fuel/air mixture,
wherein a portion of the generated exhaust gas is introduced into an ancillary chamber (40), which is connected with the power chamber (20) via a flow-through valve (46) and whose volume is determined by an auxiliary piston (48), gaseous fuel is supplied to the hot exhaust gas located in the ancillary chamber (40), which fuel is vaporized in the ancillary chamber (40) owing to the thermal energy of the exhaust gas, and the gaseous fuel/exhaust gas mixture located in the ancillary chamber (40) is injected into the compressed fresh air by decreasing the volume of the ancillary chamber (40) when the piston (12) is located in the region of its TDC.

14. Method according to claim 13, wherein the exhaust gas introduced into the ancillary chamber (40) contains residual oxygen so that the vaporization of the fuel introduced into the ancillary chamber (40) is facilitated by the combustion energy released owing to the combustion of a portion of the fuel located in the ancillary chamber (40).

15. Method for operating a reciprocating piston internal combustion engine including at least one cylinder (10), in which a piston (12) connected with a crankshaft (16) and defining a power chamber (20) is reciprocally movable between a BDC and a TDC, including the following power steps:
during the movement of the piston in a last phase before the BDC up to a first phase after BDC, introducing pressurized fresh air into the power chamber and discharging exhaust gas from the power chamber,
during the movement of the piston to the TDC, compressing the introduced fresh air, introducing gaseous fuel into the compressed fresh air when the piston is located in the region of its TDC,
during a first phase of the movement of the piston from the TDC to the BDC, combusting the fuel/air mixture,
wherein pressurized gaseous fuel is introduced into an ancillary chamber, which is connected with the power chamber (20) via a flow-through valve (46) and whose volume is determined by an auxiliary piston (48), and is injected into the compressed fresh air by decreasing the volume of the ancillary chamber when the piston is located in the region of its TDC.

16. Method according to one of claims 10 or 12, wherein the volume of the ancillary chamber (40) after the injection of the gaseous fuel from the ancillary chamber (40) into the power chamber (20) is increased from a minimum value to a maximum value and gaseous fuel, which is at a supply pressure, is introduced into the power chamber (20) during a first phase of a volume increase of the ancillary chamber (40), wherein the pressure prevailing in the ancillary chamber (40) corresponds approximately to the supply pressure, the volume of the ancillary chamber (40) after ending of the introduction of the gaseous fuel is increased to the maximum value with expansion of the gas located therein, and subsequently is decreased to the minimum value for the injection of the gaseous fuel.

## Revendications

1. Machine à combustion interne à piston alternatif comprenant
au moins un cylindre (10), dans lequel un piston (12) relié à un vilebrequin (16) effectue des mouvements de va-et-vient en délimitant une chambre de travail (20), une soupape d'admission (26) servant à commander l'arrivée d'air frais dans la chambre de travail (20), une soupape d'évacuation (30) servant à commander la sortie de gaz d'échappement de la chambre de travail (20),
dans laquelle un mélange de carburant et d'air se trouvant dans la chambre de travail (20) est brûlé au cours d'un temps de travail et entraîne le piston (12) en direction d'un déplacement allant d'un point mort haut à un point mort bas afin de délivrer le travail au vilebrequin (16),
une chambre secondaire (40), qui est reliée à la chambre de travail (20) par l'intermédiaire d'une soupape de décharge (46),
un piston auxiliaire (48) déterminant le volume de la chambre secondaire (40),
une soupape d'amenée de carburant (52) menant dans la chambre secondaire (40) et
un dispositif (34, 54) servant à actionner la soupape de décharge (46) et la soupape d'amenée de carburant (52) ainsi que servant à déplacer le piston auxiliaire (48) de telle manière qu'aucun air frais ne parvient dans la chambre secondaire (40) depuis la chambre de travail (20) et qu'un carburant liquide introduit par le déplacement du piston auxiliaire (48) par la soupape d'amenée de carburant (52) dans la chambre secondaire (40) est introduit par soufflage après l'évaporation dans la chambre secondaire (20) ou qu'un carburant, sous forme gazeuse introduit par la soupape d'amenée de carburant (52) dans la chambre secondaire (40), provenant de la chambre secondaire (40) est introduit par soufflage dans la chambre de travail (20) afin de former le mélange de carburant/d'air combustible.

2. Machine à combustion interne à piston alternatif selon la revendication 1, dans laquelle la soupape d'amenée de carburant (52) est adaptée afin d'introduire du carburant liquide et est raccordée à une unité d'alimentation en carburant (53), qui achemine du carburant liquide sous pression.

3. Machine à combustion interne à piston alternatif selon la revendication 1, dans laquelle la soupape d'amenée de carburant (52) est adaptée afin d'introduire du carburant sous forme gazeuse et est raccordée à une unité d'alimentation en carburant (53), qui achemine du carburant sous forme gazeuse sous pression.

4. Machine à combustion interne à piston alternatif selon l'une quelconque des revendications 1 à 3, contenant une soupape d'amenée de carburant pour du carburant liquide et une soupape d'amenée de carburant pour du carburant sous forme gazeuse.

5. Machine à combustion interne à piston alternatif selon l'une quelconque des revendications 1 à 4, fonctionnant selon un procédé à quatre temps.

6. Machine à combustion interne à piston alternatif selon l'une quelconque des revendications 1 à 4, fonctionnant selon un procédé à deux temps.

7. Machine à combustion interne à piston alternatif selon l'une quelconque des revendications 1 à 6, dans laquelle le mélange d'air et de carburant se trouvant dans la chambre de travail (20) au début d'un temps de travail s'allume suite aux caractéristiques de ses substances et à sa compression.

8. Machine à combustion interne à piston alternatif selon l'une quelconque des revendications 1 à 6, contenant un dispositif d'allumage servant à allumer le mélange d'air et de carburant se trouvant dans la chambre de travail au début d'un temps de travail.

9. Machine à combustion interne à piston alternatif selon l'une quelconque des revendications 1 à 8, dans laquelle le piston (12) présente une cavité de piston (18), qui est réalisée sous la forme d'un renflement concave relativement plat, lequel s'étend au moins sur une grande partie du fond de piston.

10. Procédé servant à faire fonctionner une machine à combustion interne à piston alternatif comprenant au moins un cylindre (10), dans lequel un piston (12) délimitant une chambre de travail (20), relié à un vilebrequin (16) effectue des mouvements de va-et-vient, dans lequel de l'air frais afflue dans la chambre de travail (20) lors d'un temps d'aspiration, l'afflux d'air frais est comprimé lors d'un temps de compression, l'air frais comprimé mélangé au carburant est brûlé lors d'un temps de travail et des gaz d'échappement sortent de la chambre de travail (20) lors d'un temps d'évacuation, dans lequel procédé une partie des gaz d'échappement formés par la combustion provenant de la chambre de travail (20) afflue dans une chambre secondaire (40), qui est reliée à la chambre de travail (20) par l'intermédiaire d'une soupape de décharge (46) et dont le volume est déterminé par un piston auxiliaire (48), en augmentant le volume de la chambre secondaire, dans lequel du carburant est introduit dans les gaz d'échappement chauds se trouvant dans la chambre secondaire (40), lequel carburant s'évapore suite à l'énergie thermique des gaz d'échappement, et où les gaz d'échappement se trouvant dans la chambre secondaire (40), mélangés au carburant sont introduits par soufflage dans la chambre de travail (20) sous la forme d'un mélange sous forme gazeuse de carburant/de gaz d'échappement au cours d'une plage finale du temps de compression et/ou d'une plage initiale du temps de travail en réduisant le volume de la chambre secondaire (40).

11. Procédé selon la revendication 10,
dans lequel les gaz d'échappement affluant dans la chambre secondaire (40) contiennent de l'oxygène résiduel si bien que l'évaporation du carburant introduit dans la chambre secondaire (40) est soutenue par l'énergie de combustion se dégageant suite à la combustion d'une partie du carburant se trouvant dans la chambre secondaire (40).

12. Procédé servant à faire fonctionner une machine à combustion interne à piston alternatif comprenant au moins un cylindre (10), dans lequel un piston (12) délimitant une chambre de travail (20), relié à un vilebrequin (16) effectue des mouvements de va-et-vient, dans lequel de l'air frais afflue dans la chambre de travail (20) lors d'un temps d'aspiration, l'afflux d'air frais est comprimé lors d'un temps de compression, l'air frais comprimé mélangé au carburant est brûlé lors d'un temps de travail et des gaz d'échappement sortent de la chambre de travail (20) lors d'un temps d'évacuation, dans lequel procédé du carburant sous forme gazeuse introduit dans une chambre secondaire, qui est reliée par l'intermédiaire d'une soupape de décharge (46) à la chambre de travail (20) et dont le volume est déterminé par un piston auxiliaire (48), est introduit par soufflage dans la chambre de travail (20) au cours d'une plage finale du temps de compression et/ou au cours d'une plage initiale du temps de travail en réduisant le volume de la chambre secondaire (40).

13. Procédé servant à faire fonctionner une machine à combustion interne à piston alternatif comprenant au moins un cylindre (10), dans lequel un piston (12) délimitant une chambre de travail (20), relié à un vilebrequin (16) effectue des mouvements de va-et-vient entre un point mort inférieur et un point mort supérieur, contenant des étapes de travail qui suivent consistant à :
introduire de l'air frais sous pression dans la chambre de travail (20) et acheminer les gaz d'échappement hors de la chambre de travail (20) au cours du déplacement du piston dans une dernière phase avant le point mort inférieur jusqu'à une première phase après le point mort inférieur,
comprimer l'air frais introduit, introduire du carburant sous forme gazeuse dans l'air frais comprimé lorsque le piston (12) se trouve dans la plage de son point mort supérieur au cours du déplacement du piston (12) vers le point mort supérieur,
faire brûler le mélange de carburant et d'air au cours d'une première phase du déplacement du piston (12) depuis le point mort supérieur vers le point mort inférieur,
dans lequel une partie des gaz d'échappement formés est introduite dans une chambre secondaire (40), qui est reliée à la chambre de travail (20) par l'intermédiaire d'une soupape de décharge (46) et dont le volume est déterminé par un piston auxiliaire (48), du carburant liquide est amené aux gaz d'échappement chauds se trouvant dans la chambre secondaire (40), lequel carburant s'évapore dans la chambre secondaire (40) suite à l'énergie thermique des gaz d'échappement, et
le mélange de carburant et de gaz d'échappement sous forme gazeuse se trouvant dans la chambre secondaire (40) est introduit par soufflage dans l'air frais comprimé par la réduction du volume de la chambre secondaire (40) lorsque le piston (12) se trouve dans la plage de son point mort supérieur.

14. Procédé selon la revendication 13, dans lequel les gaz d'échappement introduits dans la chambre secondaire (40) contiennent de l'oxygène résiduel de sorte que l'évaporation du carburant introduit dans la chambre secondaire (40) est soutenue par l'énergie de combustion se dégageant suite à la combustion d'une partie du carburant se trouvant dans la chambre secondaire (40).

15. Procédé servant à faire fonctionner une machine à combustion interne à piston alternatif comprenant au moins un cylindre (10), dans lequel un piston (12) délimitant une chambre de travail (20), relié à un vilebrequin (16) effectue des mouvements de va-et-vient entre un point mort inférieur et un point mort supérieur,
contenant les étapes de travail qui suivent consistant à :
introduire de l'air frais sous pression dans la chambre de travail et acheminer les gaz d'échappement hors de la chambre de travail au cours du déplacement du piston dans une dernière phase avant le point mort inférieur jusqu'à une première phase après le point mort inférieur,
comprimer l'air frais introduit, introduire du carburant sous forme gazeuse dans l'air frais comprimé lorsque le piston se trouve dans la plage de son point mort supérieur au cours du déplacement du piston vers le point mort supérieur,
faire brûler le mélange de carburant et d'air au cours d'une première phase du déplacement du piston depuis le point mort supérieur vers le point mort inférieur,
dans lequel le carburant sous forme gazeuse sous pression est introduit dans une chambre secondaire, qui est reliée à la chambre de travail (20) par l'intermédiaire d'une soupape de décharge (46) et dont le volume est déterminé par un piston auxiliaire (48), et est introduit par soufflage dans l'air frais comprimé par la réduction du volume de la chambre secondaire lorsque le piston se trouve dans la plage de son point mort supérieur.

16. Procédé selon l'une quelconque des revendications 10 à 12, dans lequel le volume de la chambre secondaire (40) est agrandi, après l'introduction par soufflage du carburant sous forme gazeuse provenant de la chambre secondaire (40) dans la chambre de travail (20), d'une valeur minimale à une valeur maximale et du carburant sous forme gazeuse sous une pression d'alimentation est introduit dans la chambre secondaire (40) au cours d'une première phase de l'augmentation de volume de cette dernière, dans lequel la pression présente dans la chambre secondaire (40) correspond approximativement à la pression d'alimentation, le volume de la chambre secondaire (40) est agrandi à la valeur maximale à l'issue de l'introduction du carburant sous forme gazeuse sous l'expansion du gaz s'y trouvant puis est réduit immédiatement après à la valeur minimale afin d'introduire par soufflage le carburant sous forme gazeuse.
